(19) Europäisches Patentamt
European Patent Office
Office européen des brevets

(11) **EP 2 427 581 B1**

(12) **EUROPÄISCHE PATENTSCHRIFT**

(45) Veröffentlichungstag und Bekanntmachung des Hinweises auf die Patenterteilung:
**11.07.2018 Patentblatt 2018/28**

(51) Int Cl.:
*C21C 5/54* [(2006.01)]    *C21C 5/36* [(2006.01)]
*C21C 7/00* [(2006.01)]    *C21C 5/52* [(2006.01)]

(21) Anmeldenummer: **10721964.4**

(86) Internationale Anmeldenummer:
**PCT/EP2010/002813**

(22) Anmeldetag: **07.05.2010**

(87) Internationale Veröffentlichungsnummer:
**WO 2010/127869 (11.11.2010 Gazette 2010/45)**

(54) **VERFAHREN ZUM SCHLACKESCHÄUMEN EINER NICHTROSTFREI-STAHLSCHMELZE IN EINEM ELEKTROLICHTBOGENOFEN**

PROCESS FOR SLAG FOAMING A NON-STAINLESS STEEL MELT IN AN ELECTRIC ARC FURNACE

PROCÉDÉ DE MOUSSAGE DE LAITIER D'ACIER LIQUIDE NON INOXYDABLE DANS UN FOUR À ARC ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **08.05.2009   DE 102009020494**

(43) Veröffentlichungstag der Anmeldung:
**14.03.2012   Patentblatt 2012/11**

(73) Patentinhaber: **SMS group GmbH**
**40237 Düsseldorf (DE)**

(72) Erfinder:
• **REICHEL, Johann**
  **40489 Düsseldorf (DE)**
• **ROSE, Lutz**
  **47259 Duisburg (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
**WO-A1-2004/104232     DE-A1-102006 004 532**

**Beschreibung**

Die Erfindung betrifft ein Verfahren zum Schlackeschäumen einer bei der Herstellung von Nichtrostfreistahl in einem Elektrolichtbogenofen auf der Stahlschmelze befindlichen schmelzflüssigen Schlacke, bei dem der Schlacke Formlinge wie Pellets bzw. Briketts zuchargiert werden, deren Inhaltstoffe mit den mit den Fe-Oxiden unter Gasabspaltung reduzierend reagieren, wobei die entstehenden Reaktionsgase ein Schlackeaufschäumen herbeiführen.

Beim Betreiben von Elektrolichtbogenöfen werden eingefüllte Festmaterialien, vor allem Schrott und Legierungen mit den Lichtbögen der Elektroden, die von oben in das Ofengefäß ragen, aufgeschmolzen. Hierbei erfüllt die Schlacke neben ihrer Primärfunktion, der Entfernung von unerwünschten Bestandteilen aus der Schmelze, eine Schutzfunktion, da sie den Raum zwischen den Elektrodenenden und der Metalloberfläche teilweise ausfüllt und die Feuerfest-Ausmauerung des Ofens vor der Strahlungsenergie des Elektrolichtbogens schützt. Diese Schutzfunktion der Schlacke lässt sich dadurch verbessern, dass durch geeignete Verfahren ein Aufschäumen der Schlacke herbeigeführt wird.

Während des Einschmelzens des Festmaterials in einem Elektrolichtbogenofen zur Herstellung von Nichtrostfreistahl bildet sich eine Schlacke, die einen hohen Anteil von Metalloxiden, vor allem des von Fe-Oxid beinhaltet. Die Konzentration des Eisenoxids erreicht oft Werte höher als 20%.

Die Metallurgie des Prozess derartiger Schlacken bildet folgende hintereinander ablaufenden Teilreaktionen:

| | | |
|---|---|---|
| $\{O_2\}$ | $= 2 [O]$ | thermische Dissoziation des Sauerstoffs |
| $[Fe] + [O]$ | $= (FeO)$ | Eisenoxidation in der Schmelze |
| $[C] + (FeO)$ | $= [Fe] + \{CO\}$ | Eisenoxidreduktion auf der Phasengrenze Schlacke/Metall |

Die letzte Reaktion ist für die Herstellung von Kohlenstoffstahl von grundlegender Bedeutung, da Eisenoxid der wichtigste Bestandteil bei der Schaumschlackenbildung ist. Ist die Schlackenviskosität zur Aufrechterhaltung des Schaums geeignet, so bewirkt das einfache Einblasen von Kohlenstoff und Sauerstoff in die Schlacke das Schäumen, wobei das durch den Reduktionsvorgang des Metalloxids mit dem Kohlenstoff gebildete gasförmige CO mit seinen Blasen zusätzlich das Schlackeschäumen intensiviert.

Entscheidend für die Schaumschlackenbildung sind die Bestandteile des zugesetzten Schaummaterials sowie die Schlackenviskosität, die wiederum von der Zusammensetzung und der Temperatur der schmelzflüssigen Schlacke abhängt. Vor allem durch die Viskosität wird ein Zustandsbereich der schmelzflüssigen Schlacke definiert, in dem eine Schaumbildung möglich ist. Wichtig ist daher die Steuerung der für die Viskosität zuständigen Schlackenbasizität, wodurch die entstehenden Gasblasen zu einem zeitweiligen Verbleib in der Schlackenschicht gezwungen werden. Der im Schäummaterial zugesetzte Kalkstein stellt dabei eine weitere Gasquelle dar, da die thermische Dissoziation dieses Materials nach folgender Gleichung CO frei setzt:

$$(CaCO_3) = (CaO) + \{CO\}$$

Bei dem Phänomen der Blasenbildung handelt es sich um einen Prozess, der die mechanische Kraft der reagierenden Gasblasen zur Herstellung eines neuen Oberflächenbereiches in der Schlacke nutzt. Die Auftriebskräfte an den Gasblasen spalten die Schlackenoberfläche vorübergehend und sättigen die komplette Schlackenschicht zur Herstellung des Schaums. Bei einem nachhaltigen Gas-strom aus den reagierenden Stoffen wächst die Anzahl der sich ansammelnden Blasen mit wachsendem Schaum. In der Folge steigt die Höhe der Schaumschicht mit wachsender Gasmenge; sie ist direkt proportional zur Menge des Schäummaterials.

Wichtig bei einem derartigen Mechanismus ist die optimale Platzierung der Reaktionsstoffe, um so eine maximale Schäumwirkung zu erhalten. Die optimale Platzierung erfolgt im Grenzbereich zwischen der Schlackenschicht und dem Flüssigmetall.

Bei der Herstellung von Nichtrostfreistahl wird das Schlackeaufschäumen bislang konventionell mit Hilfe von eingeblasenem Kohlenstoff (Koks, Graphit, Kohle) und Sauerstoff ins Schäumen gebracht. Diese Technik erfordert eine aufwändige Unterhaltung von Einblassystemen und die Verwendung von Sauerstoff- und Kohlenstoffträgern. Diese Technik ist nicht nur aufwändig, sondern auch wenig effizient in Bezug auf die eingebrachten Komponenten, da eingeblasene Stäube (auch $Fe_2O_3$) bei falschem Einblaswinkel zum größten Teil durch das Ofenabsaugsystem dem Reduktionsprozess entzogen werden.

In der EP 0829 545 B1 wird ein Verfahren zur Herstellung einer Schaumschlacke auf schmelzflüssigem rostfreiem Stahl in einem Elektroofen beschrieben, wobei in die Schlacke ein Pulver mit Hilfe eines Injektionsmediums, beispielsweise Stickstoff, eingeführt wird, das sich aus einem Metalloxid, entweder Zinkoxid oder Bleioxid, und Kohlenstoff zusammensetzt. Das in dem Pulver enthaltene Oxid wird reduziert, indem es mit dem Kohlenstoff reagiert. Hierbei werden in der Schlacke Blasen gebildet, die im Wesentlichen aus Kohlenmonoxid bestehen und die die Schlacke aufschäumen lassen. Aufgrund der mit der Pulverform verbundenen relativ großen Oberfläche kommt es zu einer kurzen, heftigen Reaktion mit der Schlacke, die zudem örtlich begrenzt in der Nähe der Einspritz- bzw. der Einblasvorrichtung im Schmelzbad stattfindet.

Um die Nachteile des Einbringens von pulverförmigen Stoffen zu vermeiden, wird in der WO 2004/104232 vorgeschlagen, die zur Herstellung einer Schaumschlacke auf einer hochchromhaltigen Stahlschmelze zum Aufschäumen der Schlacke verwendeten Materialien, ein Gemisch aus Metalloxid und Kohlenstoff, als gepresste und/oder mit einem Bindemittel versehene Formteile in den Elektroofen zu chargieren. Die Dichte dieser Formteile ist dabei so eingestellt, dass sie nahe der Phasengrenze Schmelze/Schlacke im Metall schwimmen und reagieren.

In der DE 10 2007 006 529 A1 werden bei der Herstellung einer Schaumschlacke auf einer hochchromhaltigen Stahlschmelze zusätzlich die in der Schlacke befindlichen Metalloxide, vorwiegend Chromoxid, durch die nahe der Phasengrenze Schmelze/Schlacke schwimmenden Briketts und/oder Pellets reduziert, wobei die entstehenden Reaktionsgase das Schlackeaufschäumen unterstützen. Hierzu bestehen die in den Elektrolichtbogenofen chargierten Briketts bzw. Pellets aus einem definierten Gemisch aus einem Eisenträger als Ballastmaterial, aus Kohlen-stoff bzw. Kohlenstoff und Silizium als Reduktionsmittel sowie einem Bindemittel.

Um die aufwändige Unterhaltung von Einblassystemen und die unerwünschten Wertstoffverluste durch das Einblasen der Sauerstoff- und Kohlenstoffträger auch bei der Herstellung von Nichtrostfreistahl in einem Elektrolichtbogenofen zu reduzieren, besteht die Aufgabe der Erfindung darin, ein Verfahren zum Schlackeschäumen einer Nichtrostfrei-Stahlschmelze anzugeben, in der die positiven Erfahrungen der Schlackenschäumung von chromhaltigen Schlacken durch die Zugabe gepresster Formteile in den Elektrolichtbogenofen mit einfließen.

Die gestellte Aufgabe wird mit den kennzeichnenden Merkmalen des Anspruchs 1 dadurch gelöst, dass die in den Elektrolichtbogenofen chargierten Pellets bzw. Briketts aus einem definierten Gemisch aus einem Eisenoxidträger, Kalkstein, Balastmaterial und einem Kohlenstoffträger als Reduktionsmittel sowie aus einem Bindematerial bestehen, wobei die Pellets bzw. Briketts hinsichtlich ihrer Dichte so hergestellt sind, dass sie nahe der Phasengrenze Schmelze/Schlacke in der Stahlschmelze schwimmen und unter der Schlackenschicht mit den Eisenoxidträgern der Pellets/Briketts reduzierend reagieren und wobei die aus ihrer Größe und Verdichtung resultierende Auflösungsdauer der Pellets bzw. Briketts eine optimale Reduktion des Eisenoxids in Bezug auf die Effizienz und Dauer herbeiführen.

Um mit der Eisenoxidreduktion auf der Phasengrenze Schlacke - Metall, innerhalb der Pellets/Briketts, eine ausreichende Schäumungshöhe und Schaumqualität zu erzielen, variiert die Zusammensetzung der Pellets bzw. Briketts beispielhaft in folgenden Bereichen:

| | |
|---|---|
| Koks | > 5 % |
| Eisenoxidträger | > 20 % |
| Kalkstein | 0-15% |
| Ballastmaterial | > 20 % |
| Bindematerial | < 6 % |

In Abhängigkeit von der herzustellenden Stahlsorte werden unterschiedliche Mengen an Pellets bzw. Briketts mit einer derartigen beispielhaften Zusammensetzung der Schlacke zuchargiert, wobei die variierbare Menge im Bereich von 10 bis 40 kg/t Flüssigstahl liegt.

Damit die Pellets bzw. Briketts gemäß der Erfindung nahe der Phasengrenze Schmelze/Schlacke in der Schmelze schwimmen, so dass sie unterhalb der Schlackenschicht chemisch mit den Eisenoxidträger der Briketts reagieren können, ist ihre Dichte so kontrolliert eingestellt, dass sie mit Werten zwischen 3 bis 4 $t/m^3$ zwischen der Dichte der Schlacke und der der Metallschmelze (4 bis 9 $m^3/t$) liegt.

Erreicht wird diese Dichte durch ein entsprechend eingestelltes Mischungsverhältnis von Kalkstein, Ballastmaterial und Reduktionsmittel sowie durch die Verdichtung bei der Formgebung der Mischung zu Pellets bzw. Briketts. Damit die Pellets bzw. Briketts nahe der Phasengrenze Schmelze/Schlacke schwimmen und gleichmäßig, langsam reagieren, ist neben ihrer Dichte auch ihre Größe von Einfluss, weshalb ihr mittleres Maß auf Werte zwischen vorzugsweise in etwa H 50 x L 60 x B 60 mm eingestellt ist.

Ganz speziell wurde festgestellt, dass Pellets bzw. Briketts mit Fein-Stahlschrott die Dichtigkeitsanforderungen erfüllen, Kalkstein die Gasbildung verbessert und Briketts mit einer Dichte von mehr als 3,2 $t/m^3$ eine Platzierung direkt unter der Schlacke gewährleisten.

Gutes Schlackenschäumen ist von der Schlackenviskosität abhängig. Niedrigere Temperaturen (1500 °C bis 1550 °C) korrespondieren mit einer niedrigeren Basizität (Kalk nicht vollständig gelöst), höhere Temperaturen (1600 °C bis 1650 °C) mit einer höheren Basizität (Kalk vollständig gelöst). Da beide Faktoren gegensätzlich arbeiten, wird die Temperatur und die Basizität der Schlacke kontinuierlich kontrolliert und entsprechend gesteuert.

Um einen hohen Schäumungseffekt zu erzielen, muss zu Beginn des Schäumens eine ausreichende Schlackenhöhe auf der Stahlschmelze vorhanden sein, weshalb eine entsprechende Schlackenhöhensteuerung vor und während des Schäumens durchgeführt wird. Vor der Steuerung der Schlackenhöhe soll Minimum-Schlackenmenge von > 60 kg/t gewährleistet werden.

Zur Herstellung der Pellets bzw. Briketts werden erfindungsgemäß trockene bzw. nasse Reststoffe, die bei der Herstellung der verschiedenen Stahlprodukte anfallen, verwendet.

Das Balastmaterial besteht hierbei vorwiegend aus dem die Nichtrostfrei-Stähle bildende Element Eisen, wobei nach einer vorteilhaften Ausgestaltung der Erfindung als Balastmaterial niedriglegierter Feinschrott mit einer Dichte von ca. 7t/m$^3$, fein geschreddert verwendet wird. Der in den Pellets bzw. Briketts enthaltende Kohlenstoffträger ist erfindungsgemäß Koks. Als Reduktionsmittel sind aber auch andere Kohlenstoffträger wie beispielsweise Kohle einsetzbar.

Um derartige Mischungen zu festen Pellets bzw. Briketts verpressen zu können, ist ein geeignetes Bindematerial erforderlich. Bewährt hat sich hier Melasse und Zement, alternativ können aber auch zur Verpressung Bitumen, Teerpech, Calciumhydrate und pflanzliche Stoffe wie z. B. Celulose eingesetzt werden.

Bei der Herstellung der Pellets bzw. Briketts ist es wichtig, dass die erzeugte Form und Größe sowie die stattgefundene Verdichtung an ihre spätere Verwendung angepasst ist. Gefordert wird hier, dass die Auflösungsdauer bei ihrer Reaktion mit den Inhaltstoffen der Schlacke an eine optimale Reduktion angepasst ist. Sie sollten deshalb thermisch stabil sein und nicht sofort nach ihrem Eintrag in den heißen Elektrolichtbogenofen einschmelzen. Darüber hinaus sollten sie bezüglich ihrer Form, Größe und Festigkeit so beschaffen sein, dass ein pneumatischer Transport bzw. ein einfaches Chargieren über den Ofendeckel und hier über das fünfte Deckelloch in den Elektrolichtbogenofen möglich sind.

Weitere Einzelheiten und Vorteile der Erfindung werden nachfolgend an schematischen Zeichnungsfiguren eines Ausführungsbeispiels näher erläutert.

Es zeigen:

Fig. 1 den Querschnitt eines Elektrolichtbogenofens mit Zugabevorrichtungen für Pellets bzw. Briketts,

Fig. 2 eine vergrößerte Ansicht der von der Stahlschmelze mit der darüber schwimmenden Schlacke gebildeten Phasengrenze.

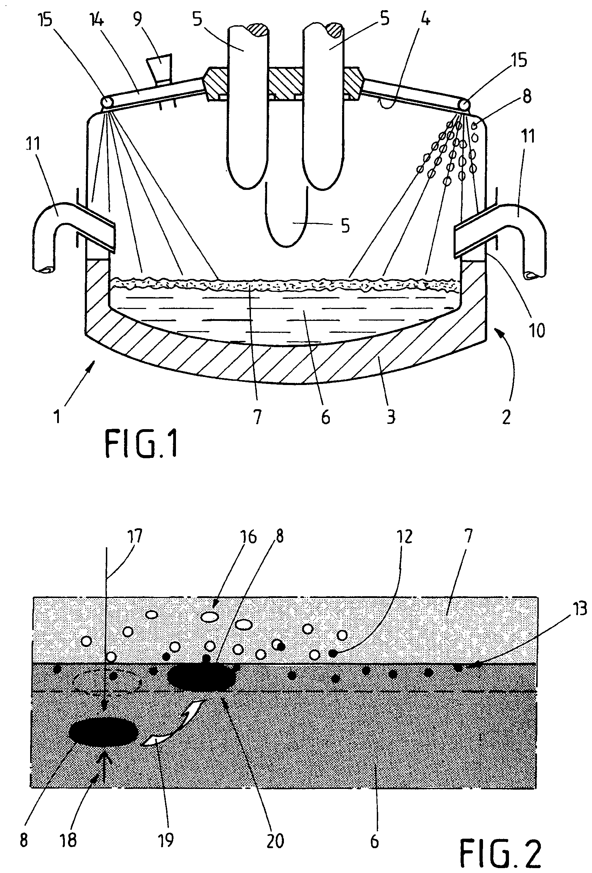

Der in Figur 1 dargestellte Elektrolichtbogenofen 1 besteht aus einem Ofengefäß 2 mit feuerfester Wandung 3 und einem Ofendeckel 4 sowie drei Elektroden 5, die von oben durch den Ofendeckel 4 in das Ofengefäß 2 geführt sind. Im unteren Teil des Ofengefäßes 2 befindet sich innerhalb der feuerfesten Wandung 3 eine Stahlschmelze 6 mit darüber liegender schmelzflüssiger Schlacke 7. Über ein Deckelloch 9 werden die Pellets bzw. Briketts 8 direkt der Schmelze auf Gravitationsart zugegeben oder durch beispielsweise ein Gravitationsfördersystem (das Gravitationsfördersystem ist nicht dargestellt) in das Ofeninnere und dort in den ringförmigen Raum zwischen der seitlichen Ofenwand 10 und dem aus den Elektroden 5 gebildeten Elektrodenkreis eingebracht. Alternativ können die Pellets bzw. Briketts 8 durch ein pneumatisches bzw. mechanisches Fördersystem mittels einer radial zum Ofendeckel 4 verlaufenden Ringleitung 14 mit Chargieröffnungen 15 oder pneumatisch oder mittels Gravitation durch in den Seitenwänden 10 des Ofens angeordnete Einlassvorrichtungen 11 in das Ofeninnere eingebracht werden.

In der Figur 2 ist in einem vergrößerten Maßstab der Bereich der von der Schlacke 7 und der Stahlschmelze 6 gebildeten Phasengrenze Schmelze/Schlacke 13 dargestellt. Mit der Pfeilrichtung 17 ist ein möglicher Weg eines in den Elektrolichtbogenofen 1 chargierten Briketts 8 eingezeichnet. Nach seinem Durchtritt durch die Schlacke 7 befindet es sich innerhalb der Schmelze 6, aber noch deutlich unterhalb der Phasengrenze Schmelze/Schlacke 13. Auf Grund des vorhandenen Dichteunterschieds zur Schmelze gelangt es dann durch seine Auftriebskraft 18 in einer möglichen Auftriebsbewegung 19, weiterhin in der in der Schmelze 6 schwimmend, in die angestrebte Endposition 20 direkt unterhalb der Phasengrenze Schmelze/Schlacke 13. In dieser unterhalb der Schlacke 7 befindlichen Position 20 findet dann mit Kohlenstoff die gewünschte Reduktion des Eisenoxids innerhalb des Briketts statt. Die bei dieser Reaktion freigesetzten Reaktionsgase 16, in der Hauptsache Kohlenmonoxid, sind als kleine Kreise und die nach diesen Reaktionen verbleibenden Brikettreste 12 sind als schwarze Punkte in der Schlacke 7 eingezeichnet. Auf Grund ihrer nun veränderten Zusammensetzung können diese Brikettreste 12 auch teilweise in der Schlacke 7 aufschwimmen.

Bezugszeichenliste

1   Elektrolichtbogenofen
2   Ofengefäß
3   Feuerfeste Ofenwandung
4   Ofendeckel
5   Elektroden
6   Stahlschmelze

| 7 | Schlacke |
| 8 | Pellets bzw. Briketts |
| 9 | Deckelloch |
| 10 | Seitenwände des Ofens |
| 11 | Einblasleitung |
| 12 | Pellets- bzw. Brikettsreste |
| 13 | Phasengrenze Schmelze/Schlacke |
| 14 | Ringleitung |
| 15 | Chargieröffnung |
| 16 | Reaktionsgase |
| 17 | Eintragsrichtung der Pellets bzw. Briketts in die Stahlschmelze |
| 18 | Auftriebskraft der Pellets bzw. Briketts in der Stahlschmelze |
| 19 | mögliche Auftriebsbewegungen der Pellets bzw. Briketts in der Stahlschmelze |
| 20 | Angestrebte Endposition der Pellets bzw. Briketts in der Stahlschmelze |

**Patentansprüche**

1. Verfahren zum Schlackeschäumen einer bei der Herstellung von Nichtrostfreistahl in einem Elektrolichtbogenofen (1) auf der Stahlschmelze (6) befindlichen schmelzflüssigen Schlacke (7), bei dem der Schlacke (7) Formlinge wie Pellets bzw. Briketts (8) zuchargiert werden, deren Inhaltstoffe mit den Fe-Oxiden unter Gasabspaltung reduzierend reagieren, wobei die entstehenden Reaktionsgase (16) ein Schlackeaufschäumen herbeiführen,
**dadurch gekennzeichnet,**
**dass** die in den Elektrolichtbogenofen (1) chargierten Pellets bzw. Briketts (8) aus einem definierten Gemisch aus einem Eisenoxidträger, Kalkstein, Balastmaterial und einem Kohlenstoffträger als Reduktionsmittel sowie aus einem Bindematerial bestehen, wobei die Pellets bzw. Briketts (8) hinsichtlich ihrer Dichte so hergestellt sind, dass sie nahe der Phasengrenze Schmelze/Schlacke (13) in der Stahlschmelze (6) schwimmen und unter der Schlackenschicht mit dem enthaltenden Eisenoxid und Kohlenstoff im Brikett reduzierend reagieren und wobei die aus ihrer Größe und Verdichtung resultierende Auflösungsdauer der Pellets bzw. Briketts (8) eine optimale Reduktion des Eisenoxids in Bezug auf die Effizienz und Dauer herbeiführen.

2. Verfahren nach Anspruch 1,
**dadurch gekennzeichnet,**
**dass** die Zusammensetzung der Pellets bzw. Briketts (8) beispielhaft in folgenden Bereichen variiert:

| Koks | > 5 % |
| Eisenoxidträger | > 20 % |
| Kalkstein | 0-15% |
| Ballastmaterial | > 20 % |
| Bindematerial | < 6 % |

3. Verfahren nach Anspruch 1 oder 2,
**dadurch gekennzeichnet,**
**dass** die Dichte der Briketts (8) auf Werte zwischen 3 bis 4 t/m$^3$ und ihr mittleres Maß auf Werte zwischen einer Höhe von 10-50 mm, einer Länge von 10-60 mm und einer Breite von 10-50 mm eingestellt ist.

4. Verfahren nach Anspruch 2 oder 3,
**dadurch gekennzeichnet,**
**dass** in Abhängigkeit von der herzustellenden Stahlsorte unterschiedliche Mengen an Pellets bzw. Briketts (8) im Bereich von 10 bis 40 kg/t flüssig Stahl der Schlacke (7) zuchargiert werden.

5. Verfahren nach Anspruch 2, 3 oder 4,
**dadurch gekennzeichnet,**
**dass** zur Herstellung der Pellets bzw. Briketts (8) trockene bzw. nasse Reststoffe, die bei der Herstellung der verschiedenen Stahlprodukte anfallen, verwendet werden.

**6.** Verfahren nach Anspruch 5,
**dadurch gekennzeichnet,**
**dass** als Balastmaterial niedriglegierter Feinschrott mit einer Dichte von ca. 7t/m$^3$ verwendet wird.

**7.** Verfahren nach einem oder mehreren der Ansprüche 1 bis 6,
**dadurch gekennzeichnet,**
**dass** als Bindematerial Melasse und/oder Bitumen und/oder Zement, Calciumhydrate und pflanzliche Stoffe wie z. B. Celulose eingesetzt werden.

**8.** Verfahren nach einem oder mehreren der Ansprüche 1 bis 7,
**dadurch gekennzeichnet,**
**dass** die Pellets bzw. Briketts (8) bezüglich ihrer Form, Größe und Verdichtung so ausgebildet sind, dass ein pneumatischer bzw. mechanischer Transport möglich ist.

**9.** Verfahren nach Anspruch 8,
**dadurch gekennzeichnet,**
**dass** die Pellet- bzw. Brikettzugabe über den Ofendeckel und hier über das 5. Deckelloch (9) bzw. über die Einblasleitung erfolgt.

**10.** Verfahren nach einem oder mehreren der Ansprüche 1 bis 9,
**dadurch gekennzeichnet,**
**dass** die zur optimalen Reduktion des Eisenoxids erforderliche Auflösungsdauer der Pellets bzw. Briketts (8) durch eine entsprechende Einstellung der Schlackenviskosität unterstützt wird, wozu die Temperatur und die Basizität der Schlacke kontinuierlich kontrolliert und entsprechend gesteuert wird.

**11.** Verfahren nach einem oder mehreren der Ansprüche 1 bis 10,
**dadurch gekennzeichnet,**
**dass** zur Erzielung einer hohen Schlackenschaumqualität sowie zur weiteren Unterstützung der Reduktionsvorgänge in den Briketts (8) eine entsprechende Schlackenhöhensteuerung vor und während des Schäumens durchgeführt wird.

## Claims

**1.** Method for slag foaming of a molten slag (7) which in the production of non-stainless steel in an electric arc furnace (1) is present on the steel melt (6), in which moulded bodies such as pellets or briquettes (8), the constituents of which react in reducing manner with the Fe oxide with removal of gas, are added to the slag (7), wherein the resulting reaction gases (16) cause foaming up of slag, **characterised in that** the pellets or briquettes (8) charged into the electric arc furnace (1) consist of a defined mixture of an iron oxide carrier, limestone, ballast material and a carbon carrier as reducing agent as well as of a binder, wherein the pellets or briquettes (8) are so produced with respect to the density thereof that they float in the steel melt (6) near the phase boundary of melt/slag (13) and react below the slag layer in reducing manner with the iron oxide and carbon present in the briquette and wherein the dissolution time, which results from the size and density thereof, of the pellets or briquettes (8) produces an optimum reduction of the iron oxide with respect to efficiency and time.

**2.** Method according to claim 1, **characterised in that** the composition of the pellets or briquettes (8) varies, for example, in the following ranges:

| | |
|---|---|
| coke | > 5% |
| iron oxide carrier | > 20% |
| limestone | 0-15% |
| ballast material | > 20% |
| binder | < 6% |

**3.** Method according to claim 1 or 2, **characterised in that** the density of the briquettes (8) is set to a value between 3 to 4 t/m$^3$ and its mean mass is set to values between a height of 10 - 50 mm, a length of 10 - 60 mm and a width of 10 - 50 mm.

4. Method according to claim 2 or 3, **characterised in that** different quantities of pellets or briquettes (8) in the range of 10 to 40 kg / t liquid steel are added to the slag (7) depending on the steel category to be produced.

5. Method according to claim 2, 3 or 4, **characterised in that** dry or wet residues arising in the production of different steel products are used for producing the pellets or briquettes (8).

6. Method according to claim 6, **characterised in that** low-alloy fine scrap with a density of approximately 7 t/m$^3$ is used as ballast material.

7. Method according to one or more of claims 1 to 6, **characterised in that** molasses and/or bitumen and/or cement, calcium hydrate and plant materials such as, for example, cellulose are used as binder.

8. Method according to one or more of claims 1 to 7, **characterised in that** the pellets or briquettes (8) have such a construction with respect to the shape, size and density thereof that pneumatic or mechanical transport is possible.

9. Method according to claim 8, **characterised in that** the pellet or briquette feed takes place by way of the furnace lid and here by way of the 5th lid aperture (9) or by way of the blowing-in duct.

10. Method according to one or more of claims 1 to 9, **characterised in that** the dissolution time, which is required for optimum reduction of the iron oxide, of the pellets or briquettes (8) is assisted by appropriate setting of the slag viscosity, for which purpose the temperature and the basicity of the slag are continuously checked and appropriately controlled.

11. Method according to one or more of claims 1 to 10, **characterised in that** an appropriate slag height control prior to and during the foaming is carried out for achieving a high slag foaming quality as well as for further assistance to the reduction processes in the briquettes (8).

**Revendications**

1. Procédé pour la transformation en mousse d'un laitier en fusion (7) disposé sur l'acier en fusion (6) lors de la production d'acier non inoxydable dans un four à arc électrique (1), dans lequel on ajoute par chargement au laitier (7), des produits moulés tels que des granulés, respectivement des briquettes (8), dont les constituants réagissent par réduction avec les oxydes de fer avec un dégagement de gaz, les gaz réactionnels (16) que l'on obtient induisant une émulsification du laitier, **caractérisé en ce que** les granulés, respectivement les briquettes (8) chargé(e)s dans le four à arc électrique (1) sont constitué(e)s d'un mélange défini constitué par un support d'oxyde de fer, du calcaire, une matière inerte et un support de carbone à titre d'agent de réduction, ainsi que par une matière faisant office de liant, les granulés, respectivement les briquettes (8) étant fabriqué(e)s, en ce qui concerne leur masse volumique, d'une manière telle qu'elles nagent à proximité de l'interface masse en fusion/laitier (13) dans l'acier en fusion (6) et qu'elles réagissent par réduction en dessous de la couche de laitier avec le carbone et l'oxyde de fer que contient la briquette, et dans lequel la durée de décomposition du granulé, respectivement de la briquette (8), qui résulte de leur dimension et de leur densification, donne lieu à une réduction optimale de l'oxyde de fer lorsqu'on prend en compte l'efficacité et la durée.

2. Procédé selon la revendication 1, **caractérisé en ce que** la composition du granulé, respectivement de la briquette (8) varie par exemple dans les plages indiquées ci-après :

| coke | >5%; |
| support d'oxyde de fer | > 20 % ; |
| calcaire | de 0 à 15%; |
| matière inerte | > 20 % ; |
| matière faisant office de liant | < 6 %. |

3. Procédé selon la revendication 1 ou 2, **caractérisé en ce que** la masse volumique de la briquette (8) est réglée à des valeurs entre 3 et 4 t/m$^3$ et leur dimension moyenne est réglée à des valeurs entre une hauteur de 10 à 50 mm, une longueur de 10 à 60 mm et une largeur de 10 à 50 mm.

4. Procédé selon la revendication 2 ou 3, **caractérisé en ce qu'**on ajoute par chargement au laitier (7), des quantités différentes de granulés, respectivement de briquettes (8) dans la plage de 10 à 40 kg/t d'acier en fusion, en fonction du type d'acier à produire.

5. Procédé selon la revendication 2, 3 ou 4, **caractérisé en ce que**, pour la fabrication du granulé, respectivement de la briquette (8), on utilise des matières résiduelles sèches, respectivement humides que l'on obtient lors de la fabrication des différents produits d'acier.

6. Procédé selon la revendication 5, **caractérisé en ce que** l'on utilise, à titre de matière inerte, de fins débris métalliques faiblement alliés dont la masse volumique s'élève à environ 7 t/m$^3$.

7. Procédé selon une ou plusieurs des revendications 1 à 6, **caractérisé en ce qu'**on met en oeuvre, à titre de matière faisant office de liant, de la mélasse et/ou du bitume et/ou du ciment, des hydrates de calcium et des substances végétales comme par exemple la cellulose.

8. Procédé selon une ou plusieurs des revendications 1 à 7, **caractérisé en ce que** les granulés, respectivement les briquettes (8) sont réalisé(e)s, en ce qui concerne leur forme, leur dimension et leur densification, d'une manière telle qu'un transport pneumatique, respectivement mécanique est possible.

9. Procédé selon la revendication 8, **caractérisé en ce que** l'addition de granulés, respectivement de briquettes a lieu via le couvercle du four et, en l'occurrence, via le cinquième trou de couvercle (9), respectivement via le tuyau d'insufflation de gaz.

10. Procédé selon une ou plusieurs des revendications 1 à 9, **caractérisé en ce qu'**on soutient la durée de décomposition requise du granulé, respectivement de la briquette pour la réduction optimale de l'oxyde de fer par un réglage correspondant de la viscosité du laitier, en contrôlant en continu et en commandant de manière correspondante à cet effet la température et la basicité du laitier.

11. Procédé selon une ou plusieurs des revendications 1 à 10, caractérisé en ce, pour l'obtention d'une qualité élevée de la mousse de laitier ainsi que pour le soutien ultérieur des processus de réduction dans les briquettes (8), on procède à un réglage correspondant de la hauteur du laitier avant et pendant la transformation en mousse.

FIG.1

FIG.2

**IN DER BESCHREIBUNG AUFGEFÜHRTE DOKUMENTE**

**In der Beschreibung aufgeführte Patentdokumente**

- EP 0829545 B1
- WO 2004104232 A
- DE 102007006529 A1